# FASCICULE DE BREVET EUROPEEN

(11) **EP 2 038 176 B1**
(45) Date de publication et mention de la délivrance du brevet: **15.09.2010**
(21) Numéro de dépôt: 07787297.6
(22) Date de dépôt: 10.07.2007
(51) Int. Cl.: B64D 29/06, B64C 7/02

(54) **ENSEMBLE MOTEUR POUR AERONEF COMPRENANT UN CAPOTAGE AERODYNAMIQUE DE JONCTION MONTE SUR DEUX ELEMENTS DISTINCTS**
MOTORANORDNUNG FÜR EIN LUFTFAHRZEUG MIT AN ZWEI GETRENNTEN ELEMENTEN ANGEBRACHTER AERODYNAMISCHER KUPPLUNGSVERTEILUNG
ENGINE ASSEMBLY FOR AIRCRAFT COMPRISING AN AERODYNAMIC COUPLING FAIRING MOUNTED ON TWO SEPARATE ELEMENTS

(30) Priorité: 11.07.2006 FR 0652912
(43) Date de publication de la demande: 25.03.2009
(73) Titulaire: AIRBUS OPERATIONS, 31060 Toulouse (FR)
(72) Inventeur: ROCHE, Frédéric, F-31530 Bretx (FR)
(74) Mandataire: Ilgart, Jean-Christophe
(86) Numéro de dépôt international: PCT/EP2007/057022
(87) Numéro de publication internationale: WO 2008/006826

(56) Documents cités:
- EP-A1- 0 744 339
- EP-A1- 1 488 999
- WO-A-99/30969

## Description

### DOMAINE TECHNIQUE

La présente invention se rapporte de façon générale à un ensemble moteur pour aéronef comprenant un moteur, un dispositif d'accrochage du moteur ainsi qu'une nacelle entourant le moteur et pourvue d'une entrée d'air et de capots de soufflante, le dispositif d'accrochage précité pouvant comporter une structure aérodynamique avant sur laquelle les capots de soufflante sont articulés. Un tel ensemble est notamment connu du document WO 99/30969.

Ce type de dispositif d'accrochage, également appelé mât d'accrochage ou « EMS » (de l'anglais « Engine Mounting Structure »), permet globalement de suspendre un moteur tel qu'un turboréacteur au-dessous de la voilure de l'aéronef, ou bien de monter ce moteur au-dessus de cette même voilure, voire encore d'assembler ce moteur sur une partie arrière de fuselage de l'aéronef.

### ETAT DE LA TECHNIQUE ANTERIEURE

Un tel dispositif d'accrochage est en effet prévu pour constituer l'interface de liaison entre un moteur et une voilure de l'aéronef. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif d'accrochage est muni de moyens d'accrochage interposés entre le moteur et la structure rigide, ces moyens comportant globalement deux attaches moteur, ainsi qu'un dispositif de reprise des efforts de poussée générés par le moteur. Dans l'art antérieur, ce dispositif de reprise comprend habituellement deux bielles latérales raccordées d'une part à un carter du moteur tel que le carter de soufflante ou le carter intermédiaire, et d'autre part à une attache moteur arrière fixée sur le carter central ou le carter d'éjection de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant notamment la ségrégation et le maintien des systèmes tout en supportant des éléments de carénage aérodynamique, ces derniers prenant généralement la forme de panneaux ou capotages intégrés à ces mêmes structures. De façon connue de l'homme du métier, les structures secondaires se différencient de la structure rigide, également dénommée structure primaire, par le fait qu'elles ne sont pas destinées à assurer le transfert des efforts provenant du moteur et devant être transmis vers la voilure de l'aéronef.

Parmi les structures secondaires, on compte habituellement une structure aérodynamique avant située à l'avant de la structure rigide du mât d'accrochage, cette structure aérodynamique avant disposant non seulement d'une fonction de carénage aérodynamique, mais permettant également la mise en place, la ségrégation et le cheminement de différents systèmes (air, électrique, hydraulique, carburant). De plus, cette structure aérodynamique avant porte généralement les capots de soufflante du moteur associé, tandis que les capots d'inverseur de poussée sont quant à eux généralement portés par la structure rigide du mât d'accrochage.

Dans les solutions de l'art antérieur, la structure aérodynamique avant comporte généralement un berceau revêtu d'un capotage aérodynamique de berceau, monté fixement sur ce dernier. Le capotage aérodynamique de berceau, également dit panneau ou élément de carénage aérodynamique, recouvre donc le berceau remplissant quant à lui un rôle structurel de support des capots de soufflante.

Le berceau précité est habituellement monté sur la structure rigide à l'aide de moyens d'accrochage appropriés. Cependant, lorsque l'ensemble moteur est soumis à d'importantes contraintes tel que cela est rencontré durant les phases de décollage et d'atterrissage, ou encore en vol lors de fortes turbulences, et plus simplement sous l'effet du couple moteur, de sa poussée et de la dilatation thermique, la solidarisation du berceau de la structure aérodynamique avant à la structure rigide induit une modification substantielle de la géométrie globale de l'ensemble, et plus spécifiquement de celle de la nacelle. En particulier, il arrive que l'on puisse observer un désaffleurement entre l'entrée d'air de la nacelle accompagnant la déformation du moteur, et le capotage aérodynamique de berceau porté fixement par le berceau rapporté sur la structure rigide du mât d'accrochage.

Le phénomène observé provoque bien évidemment de la traînée, ce qui nuit aux performances globales de l'aéronef.

De plus, il est indiqué qu'un phénomène analogue est également rencontré lorsque le berceau portant fixement le capotage aérodynamique n'est plus monté sur la structure rigide du mât d'accrochage, mais exclusivement sur le carter de soufflante du moteur, solidaire de l'entrée d'air de la nacelle. Dans un tel cas, il arrive alors que l'on puisse observer un désaffleurement entre le capotage aérodynamique de berceau solidaire du carter de soufflante, et les autres carénages aérodynamiques du mât d'accrochage, et en particulier le carénage dit carénage de raccordement.

### EXPOSÉ DE L'INVENTION

L'invention a donc pour but de proposer un ensemble moteur pour aéronef remédiant aux inconvénients mentionnés ci-dessus, relatifs aux réalisations de l'art antérieur.

Pour ce faire, l'invention a pour objet un ensemble moteur pour aéronef tel que défini dans les revendications indépendante 1 et 4.

Des caractéristiques supplémentaires optionnelles sont définies dans les revendications dépendantes.

Par conséquent, l'agencement proposé permet de limiter fortement les effets néfastes de désaffleurement décrits ci-dessus, étant donné que la fixation particulière du capotage aérodynamique de jonction permet à présent de mieux faire face à la déformation du moteur durant les périodes de fortes sollicitations de l'ensemble. Cela permet avantageusement de limiter les pertes en traînée rencontrées avec les réalisations de l'art antérieur.

A titre d'exemple indicatif, lorsqu'il est prévu de monter le berceau fixement sur la structure rigide du mât d'accrochage afin qu'il constitue une partie d'une structure aérodynamique avant de ce même mât, la jonction affleurante entre l'entrée d'air de la nacelle et ce même capotage aérodynamique de jonction peut être conservée grâce à la présence des seconds moyens d'accrochage liant ce capotage aérodynamique de jonction à l'entité intégrant le carter de soufflante du moteur et l'entrée d'air de nacelle lui étant solidaire, tandis que la jonction affleurante entre le capotage aérodynamique de jonction et les autres carénages aérodynamiques du mât d'accrochage est naturellement assurée par la présence des premiers moyens d'accrochage liant ce capotage aérodynamique au berceau, lui-même de préférence rapporté fixement sur la structure rigide du mât.

Toujours à titre d'exemple indicatif, lorsqu'il est au contraire prévu de monter le berceau fixement sur le carter de soufflante, la jonction affleurante entre le capotage aérodynamique de jonction et les autres carénages aérodynamiques du mât d'accrochage peut être conservée grâce à la présence des seconds moyens d'accrochage liant ce capotage aérodynamique de jonction au mât d'accrochage, tandis que la jonction affleurante entre le capotage aérodynamique de jonction et le capotage aérodynamique de berceau est naturellement assurée par la présence des premiers moyens d'accrochage liant ce capotage aérodynamique de jonction au berceau, lui-même rapporté fixement sur le carter de soufflante du moteur.

En d'autres termes, il est indiqué que l'agencement selon la présente invention permet, dans tous les cas de figure, au capotage aérodynamique de jonction de se comporter tel un « wagon » soit entre l'entrée d'air située en amont de celui-ci et le capotage aérodynamique de berceau lorsque le berceau est solidaire de la structure rigide du mât, soit entre ce même capotage aérodynamique de berceau situé en amont du capotage aérodynamique de jonction et un carénage de raccordement du mat d'accrochage lorsque le berceau est fixé au carter de soufflante, cette spécificité permettant ainsi de limiter significativement les désaffleurements synonymes , de pertes en traînée. A titre indicatif, il est noté que c'est le positionnement particulier évoqué ci-dessus des premier et second moyens d'accrochage qui permet d'obtenir le phénomène de « wagon ». L'idée générale de la présente invention est de limiter les désaffleurements en prévoyant un capotage aérodynamique monté d'une part sur le berceau de support des capots de soufflante à l'aide des premiers moyens d'accrochage, et d'autre part monté à l'aide des seconds moyens d'accrochage, sur l'un des éléments pris parmi le dispositif accrochage de ladite entité, l'autre de ces éléments étant monté fixement sur ce même berceau de support des capots de soufflante.

Comme cela sera détaillé ci-après, deux modes de réalisation préférés sont envisagés. Ainsi, pour le cas où le berceau de support des capots de soufflante est monté fixement sur le mât, l'ordre des éléments, de l'arrière vers l'avant, est le mât d'accrochage, le berceau de support, le capotage aérodynamique, et l'entité comprenant l'entrée d'air. Dans l'autre cas où le berceau est rapporté fixement sur ladite entité, l'ordre des éléments, de l'arrière vers l'avant, est le mât d'accrochage, le capotage aérodynamique, le berceau de support, et ladite entité.

D'autre part, il est précisé que le phénomène bénéfique de « wagon » est d'autant plus accentué lorsque les premiers et seconds moyens d'accrochage équipant le capotage aérodynamique de jonction sont respectivement agencés à proximité d'une extrémité avant et d'une extrémité arrière de ce même capotage aérodynamique de jonction, ou inversement.

Selon un premier mode de réalisation préféré de la présente invention, déjà évoqué ci-dessus, le berceau est monté fixement sur une structure rigide du dispositif d'accrochage, et de préférence pas fixé à ladite entité précitée, le berceau faisant alors partie intégrante d'une structure aérodynamique avant du dispositif d'accrochage. De plus, les seconds moyens d'accrochage équipant le capotage aérodynamique de jonction sont montés sur l'entrée d'air.

Dans ce cas, on prévoit préférentiellement que le capotage aérodynamique de jonction établit une jonction aérodynamique entre l'entrée d'air et un capotage aérodynamique de berceau recouvrant ce berceau. Plus particulièrement, on fait en sorte que le capotage aérodynamique de jonction soit situé entre une excroissance aérodynamique de l'entrée d'air et le capotage aérodynamique de berceau.

Néanmoins, il serait naturellement possible de prévoir une configuration dans laquelle le capotage aérodynamique de jonction intégrerait également le capotage aérodynamique de berceau pour former un capotage aérodynamique unique s'étendant vers l'avant au-delà du berceau, jusqu'à l'entrée d'air, sans sortir du cadre de l'invention. En d'autres termes, ce capotage aérodynamique unique s'étendrait alors vers l'arrière de l'excroissance aérodynamique de l'entrée d'air, jusqu'au carénage de raccordement du mât d'accrochage.

Dans ce premier mode, les seconds moyens d'accrochage comprennent une attache conçue de manière à reprendre des efforts s'exerçant selon une direction longitudinale du moteur, selon une direction transversale de ce même moteur, et également selon une direction verticale de ce dernier.

Selon un second mode de réalisation préféré de la présente invention, le berceau est monté fixement sur le carter de soufflante, et de préférence pas fixé au dispositif d'accrochage. De plus, les seconds moyens d'accrochage équipant le capotage aérodynamique de jonction sont montés sur un carénage du mât d'accrochage, dit carénage de raccordement.

Dans ce second mode de réalisation préféré, le capotage aérodynamique de jonction établit une jonction aérodynamique entre ledit carénage du mât d'accrochage, et un capotage aérodynamique de berceau recouvrant le berceau.

Néanmoins, il serait naturellement possible de prévoir une configuration dans laquelle le capotage aérodynamique de jonction intégrerait également le capotage aérodynamique de berceau pour former un capotage aérodynamique unique s'étendant vers l'arrière au-delà du berceau, jusqu'au carénage de raccordement du mât, sans sortir du cadre de l'invention. En d'autres termes, ce capotage aérodynamique unique s'étendrait dans ce dernier cas longitudinalement de l'excroissance aérodynamique de l'entrée d'air, jusqu'au carénage de raccordement du mât d'accrochage.

Dans ce second mode, les premiers moyens d'accrochage comprennent une attache conçue de manière à reprendre des efforts s'exerçant selon une direction longitudinale du moteur, selon une direction transversale de ce même moteur, et également selon une direction verticale de ce dernier.

Dans cet ensemble moteur où la nacelle comporte de façon classique une entrée d'air affleurant les capots de soufflante, on prévoit préférentiellement que le berceau remplisse un rôle structurel de support des capots de soufflante, puisque l'ensemble comporte en outre préférentiellement une pluralité d'articulations de capots de soufflante dont au moins certaines d'entre elles sont fixées sur ce même berceau.

Par ailleurs, le dispositif d'accrochage comprend de préférence une pluralité d'attaches moteur parmi lesquelles une attache moteur avant fixée d'une part à la structure rigide, et d'autre part au carter de soufflante du moteur.

Enfin, l'invention a également pour objet un aéronef comprenant au moins un ensemble moteur tel que celui décrit ci-dessus, assemblé sur une aile ou sur une partie arrière de fuselage de cet aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un ensemble moteur pour aéronef, selon un premier mode de réalisation préféré de la présente invention ;
- la figure 2 représente une vue partielle schématique de côté de l'ensemble moteur montré sur la figure 1 ;
- la figure 3 représente une vue partielle et détaillée en perspective de l'ensemble moteur représenté sur la figure 1, montrant plus spécifiquement le berceau de support des capots de soufflante de la nacelle ;
- la figure 4 représente une vue schématique en perspective du capotage aérodynamique de jonction équipé de ses moyens d'accrochage sur l'ensemble moteur ;
- les figures 5 et 6 représentent des vues partiellement éclatées et détaillées en perspective, prises sous deux angles différents, d'une portion de l'ensemble moteur montré sur la figure 1 ;
- la figure 7 représente une vue similaire à celle montrée sur la figure 1, l'ensemble moteur se présentant sous la forme d'un second mode de réalisation préféré de la présente invention ; et
- les figures 8 et 9 représentent des vues partiellement éclatées et détaillées en perspective, prises sous deux angles différents, d'une portion de l'ensemble moteur montré sur la figure 7.

### EXPOSÉ DÉTAILLÉ DE MODES DE RÉALISATION PRÉFÉRÉS

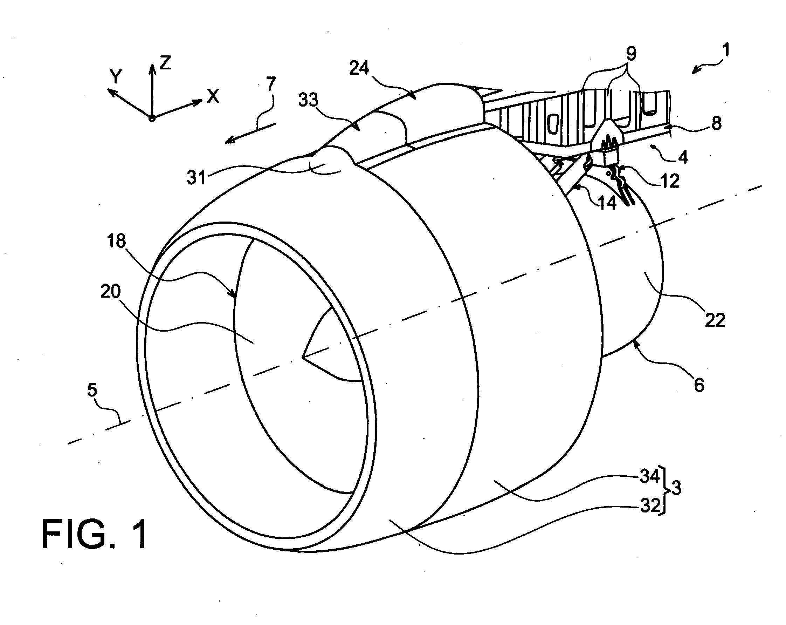

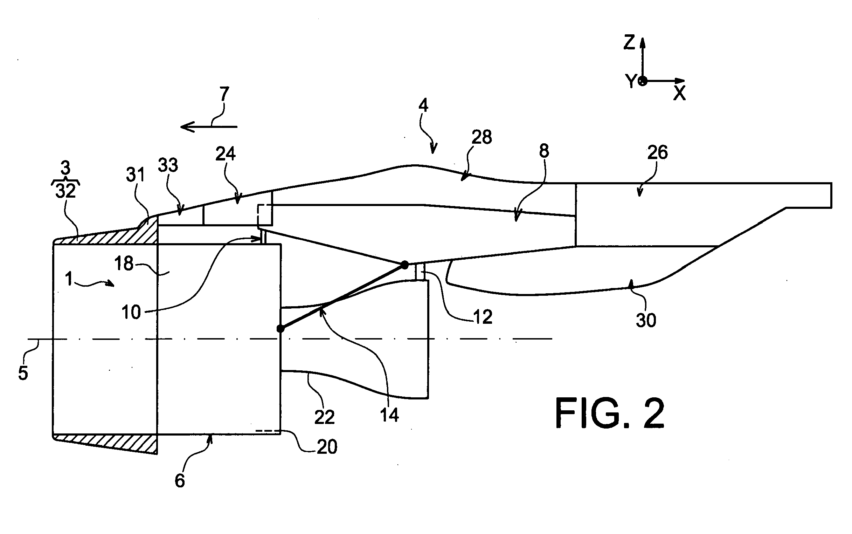

En référence tout d'abord aux figures 1 et 2, on voit un ensemble moteur 1 pour aéronef destiné à être fixé sous une aile de cet aéronef (non représentée), cet ensemble 1 comportant un dispositif d'accrochage 4, un moteur 6 tel qu'un turboréacteur accroché sous ce dispositif 4, et une nacelle 3 dont seule la partie avant a été représentée sur la figure 1.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que le dispositif d'accrochage 4 comporte une autre série d'attaches (non représentées) rapportées sur la structure rigide 8 et permettant d'assurer la suspension de cet ensemble 1 sous la voilure de l'aéronef.

De plus, le dispositif d'accrochage 4 comprend une pluralité de structures secondaires rapportées sur la structure rigide 8. Ces structures secondaires assurant la ségrégation et le maintien des systèmes tout en supportant des éléments de carénage aérodynamique seront décrits ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre, et présentent une jonction habituellement dénommée carter intermédiaire. Enfin, il est précisé que le carter central 22 se prolonge vers l'arrière par un carter dit d'éjection (non référencé).

Comme on peut clairement l'apercevoir sur la figure 1, les attaches moteur 10, 12 du dispositif 4 sont prévues au nombre de deux, et respectivement dénommées attache moteur avant et attache moteur arrière. L'attache moteur avant 10 est préférentiellement interposée entre une partie avant de la structure rigide 8, et une partie supérieure du carter de soufflante 18, également dite partie d'extrémité radiale. Cette attache moteur avant 10 est conçue de manière classique et connue de l'homme du métier par exemple prévue pour reprendre les efforts s'exerçant dans les trois directions X, Y et Z.

D'autre part, l'attache moteur arrière 12, également réalisée de façon classique et connue de l'homme du métier et pouvant être conçue pour reprendre les efforts s'exerçant dans les directions Y et Z, est quant à elle interposée entre une partie plus arrière de la structure rigide 8, et le carter central 22 ou le carter d'éjection.

Le dispositif 14 de reprise des efforts de poussée générés par le moteur peut quant à lui présenter une forme classique de double bielle chacune disposée d'un côté du moteur 6, l'extrémité avant de chaque bielle étant montée sur une partie arrière du carter de soufflante ou du carter intermédiaire, et l'extrémité arrière étant rapportée sur l'attache moteur arrière 12 ou sur la structure rigide 8 à proximité de cette dernière.

Dans ce mode de réalisation préféré de la présente invention, la structure rigide 8 prend la forme d'un caisson s'étendant de l'avant vers l'arrière, sensiblement selon la direction X.

Le caisson 8 le mieux représenté sur la figure 1 prend alors la forme d'un mât de conception similaire à celle habituellement observée pour les mâts d'accrochage de turboréacteurs, notamment en ce sens qu'il est pourvu de nervures transversales 9 prenant chacune la forme d'un rectangle orienté dans un plan YZ.

En référence plus spécifiquement à la figure 2, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier. Plus précisément, la structure aérodynamique avant 24, qui est la seule à avoir été représentée sur la figure 1 pour des raisons de clarté, est habituellement placée à l'avant de la voilure et légèrement surélevée par rapport à la structure primaire 8 à laquelle elle est fixée. Elle présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de support des capots de soufflante et de carénage aérodynamique, mais permet également la mise en place, la ségrégation et le cheminement de différents systèmes (air, électrique, hydraulique, carburant).

Directement dans le prolongement arrière de cette structure 24, monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière anti-feu, et la formation d'une continuité aérodynamique entre la sortie du moteur et le mât d'accrochage.

Toujours en référence aux figures 1 et 2, on peut voir une partie de la nacelle 3 comportant au niveau de son extrémité avant une entrée d'air 32 fixée à l'avant du carter de soufflante 18, cette entrée d'air 32 étant directement suivie vers l'arrière par deux capots de soufflante 34 (un seul visible en raison de la vue en perspective) chacun monté de façon articulée sur la structure aérodynamique secondaire 24 discutée ci-dessus. Bien que cela n'est pas été représenté, il doit être compris que la nacelle 3 de conception classique comporte vers l'arrière d'autres éléments connus de l'homme du métier, tels que des capots d'inverseur de poussée montés sur la structure rigide 8.

De plus, l'entrée d'air 32 présente au niveau de sa partie arrière supérieure une excroissance aérodynamique 31 se situant dans le prolongement avant de la structure aérodynamique avant 24 du mât. Plus précisément et comme cela est visible sur les figures, l'une des particularités de la présente invention réside dans la présence d'un carénage aérodynamique de jonction 33 entre l'excroissance 31 et la structure aérodynamique avant 24, comme cela sera explicité en détails ci-après. Naturellement, il est recherché à obtenir la meilleure continuité aérodynamique possible entre les éléments jointifs précités 31, 33 et 24, qui s'étendent sensiblement selon la direction X au niveau d'une partie supérieure de l'ensemble moteur 1. Comme cela est visible sur la figure 1, les éléments affleurants 33, 24 s'étendent ensemble sur une distance longitudinale correspondant à celle des capots de soufflante 34, au droit desquels ils se situent.

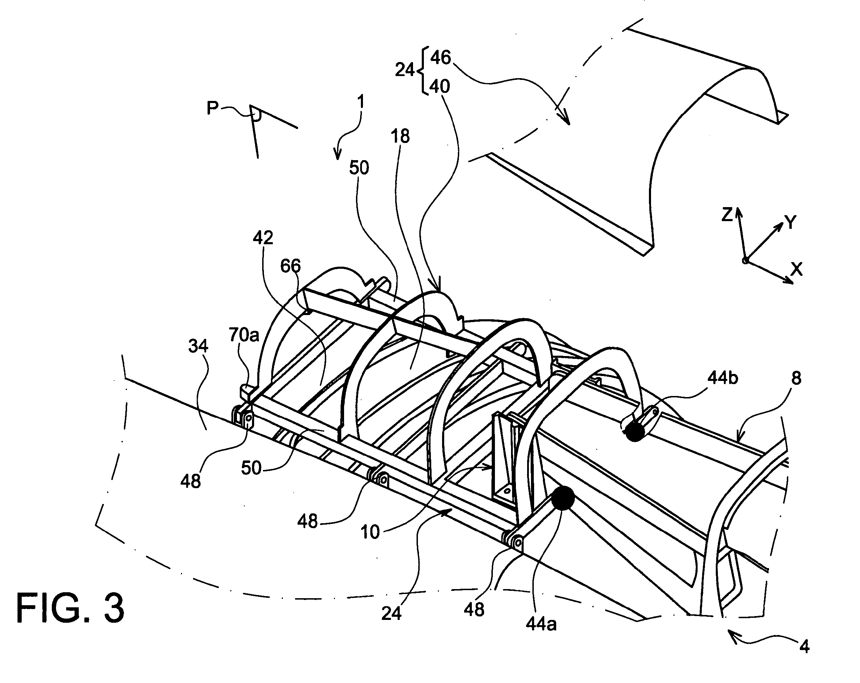

Il va à présent être fait référence à la figure 3 détaillant en particulier la structure aérodynamique avant 24.

La structure aérodynamique avant 24 présente un berceau 40 constituant la portion structurale de cet élément. Il s'étend globalement au-dessus du carter de soufflante 18, et est constitué d'une façon classique connue de l'homme du métier, à savoir par l'assemblage de longerons s'étendant sensiblement selon la direction X et d'arceaux transversaux s'ouvrant vers le bas, par exemple de forme sensiblement semi-cylindrique, comme cela est clairement visible sur la figure 3. Sur cette même figure, on peut d'ailleurs apercevoir que la partie avant de la structure rigide 8 du mât d'accrochage 4 pénètre à l'intérieur de ce berceau en traversant au moins le premier arceau de ce même berceau. D'ailleurs, étant donné que l'attache moteur avant 10 précitée est montée au niveau d'une extrémité avant de la structure rigide 8, cela implique que cette attache avant 10 est en partie située au sein d'un espace intérieur délimité par les arceaux du berceau.

Pour assurer le montage du berceau 40 sur la structure rigide 8 à partir de laquelle il peut être en porte-à-faux vers l'avant, il est prévu des moyens d'accrochage arrière prenant de préférence la forme de deux demi-attaches arrière disposées de part et d'autre d'une partie avant de la structure rigide 8. Comme on le voit sur la figure 3, ces deux demi-attaches 44a, 44b représentées schématiquement sont de préférence situées en arrière par rapport à l'attache moteur avant 10. D'autre part, ces deux demi-attaches sont agencées symétriquement par un plan vertical médian P passant par l'axe longitudinal 5 du moteur, ce plan P constituant globalement un plan de symétrie pour l'ensemble moteur destiné à être rapporté sous la voilure de l'aéronef. A titre indicatif, on fait en sorte que le berceau 40 soit uniquement fixé sur le mât 4, et donc pas sur l'entité lui étant distincte, comprenant le carter de soufflante 18 et l'entrée d'air 32 rapportée fixement sur ce dernier.

Le berceau 40, revêtu de façon classique par un capotage aérodynamique 46 de préférence uniquement fixé sur ce même berceau 40 et sur aucun autre élément de l'ensemble, est pourvu d'une pluralité d'articulations de capots de soufflante 34, ces articulations étant de préférence agencées au niveau de chacun des deux longerons latéraux du berceau, disposés de part et d'autre du plan P. Chacun de ces deux longerons 50 porte donc une pluralité d'articulations 48 raccordées à l'un des capots de soufflante 34 de la nacelle, ces articulations 48 portées par chaque longeron 50 pouvant alternativement constituer tout ou partie des moyens d'accrochage d'un capot de soufflante donné. Dans l'exemple montré sur la figure 3, les articulations 48 prévues sur un longeron 50 donné, par exemple prévues au nombre de trois, sont associées à une quatrième articulation (non présentée) située dans le prolongement des trois autres, vers l'avant de celles-ci. Naturellement, pour chacun des deux capots de soufflante 34, les articulations 48 prévues sur le berceau 40 et la ou les articulations 48 situées en avant, sont prévues pour être agencées selon un même axe d'articulation du capot 34.

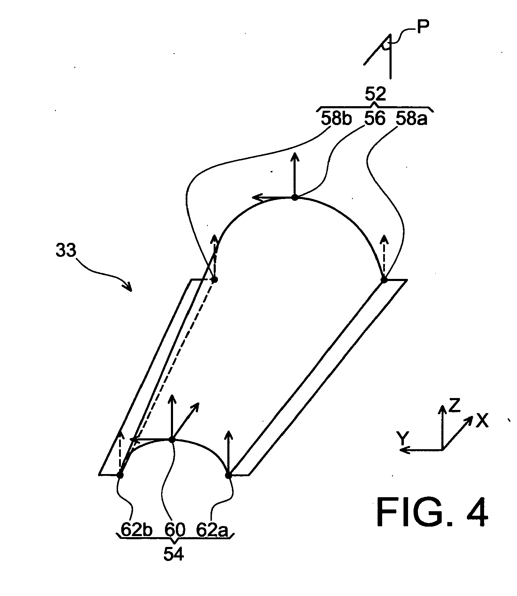

En référence à présent à la figure 4, on peut voir le capotage aérodynamique de jonction 33 destiné à être raccordé au niveau de son extrémité arrière au berceau 40, et au niveau de son extrémité avant à l'entrée d'air 32, et plus précisément à l'excroissance 31 de celle-ci.

Pour ce faire, le capotage 33 est équipé de premiers moyens d'accrochage 52 ou moyens d'accrochage arrière destinés à coopérer avec une extrémité avant du berceau 40, ainsi que de seconds moyens d'accrochage 54 ou moyens d'accrochage avant destinés à coopérer avec l'entrée d'air 32.

Plus précisément, les premiers moyens d'accrochage 52 comprennent essentiellement une attache 56 conçue de manière à reprendre les efforts s'exerçant selon les directions Y et Z, mais pas ceux s'exerçant selon la direction X, comme cela est schématisé par les flèches sur la figure 4. Elle est agencée au niveau d'une portion supérieure médiane de l'extrémité arrière du capotage 33, et se trouve donc traversée par le plan P précité. De plus, les moyens 52 peuvent également comprendre deux demi-attaches additionnelles 58a, 58b dites « réglables », chacune étant uniquement susceptible de reprendre des efforts selon la direction Z. D'autre part, ces deux demi-attaches 58a, 58b sont agencées symétriquement par rapport au plan vertical médian P passant par l'axe longitudinal 5 du moteur, respectivement au niveau des deux extrémités latérales de l'extrémité arrière du capotage 33.

D'autre part, les seconds moyens d'accrochage 54 comprennent essentiellement une attache 60 conçue de manière à reprendre les efforts s'exerçant selon les directions X, Y et Z, comme cela est schématisé par les flèches sur la figure 4. Elle est agencée au niveau d'une portion supérieure médiane de l'extrémité avant du capotage 33, et se trouve donc traversée par la plan P précité. De plus, les moyens 54 peuvent également comprendre deux demi-attaches additionnelles 62a, 62b dont l'une fixe et l'autre dite « réglable », également chacune uniquement susceptible de reprendre des efforts selon la direction Z. D'autre part, ces deux demi-attaches 62a, 62b sont agencées symétriquement par rapport au plan vertical médian P passant par l'axe longitudinal 5 du moteur, respectivement au niveau des deux extrémités latérales de l'extrémité avant du capotage 33.

Ainsi, les moyens 52, 54 offrent donc quatre attaches verticales 58a, 58b, 62a, 62b dont trois d'entre elles sont réglables/ajustables, afin d'offrir un montage aisé du capotage 33 sur l'ensemble moteur 1.

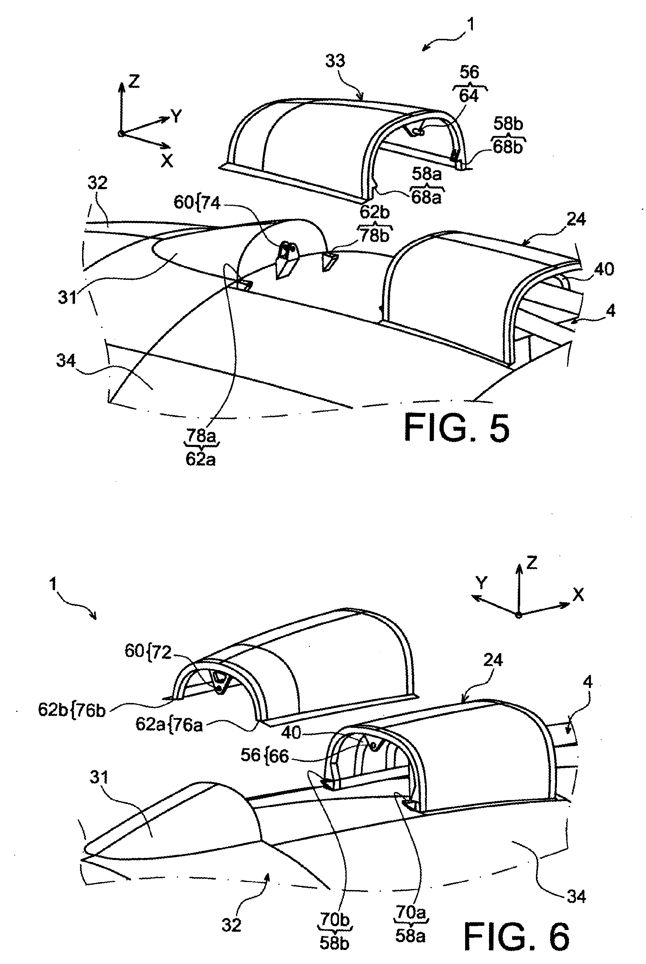

Les figures 5 et 6 montrent un exemple de réalisation pour les différentes attaches précitées. Ainsi, on s'aperçoit que l'attache 56 peut prendre la forme d'un pion 64 s'étendant selon la direction X vers l'arrière à partir de l'extrémité arrière du capotage 33, et traversant une ferrure 66 portée par l'arceau le plus avant du berceau 40. Les deux demi-attaches 58a, 58b sont quant à elles obtenues en prévoyant des butées verticales 68a, 68b orientées vers le bas sur l'extrémité arrière du capotage 33, et des butées verticales 70a, 70b orientées vers le haut sur les deux extrémités de l'arceau le plus avant du berceau 40, respectivement placées en regard des butées 68a, 68b.

Bien entendu, des moyens d'assemblage du type boulon sont prévus pour solidariser les butées deux à deux.

D'autre part, on s'aperçoit que l'attache 60 peut prendre la forme d'une ferrure 72 s'étendant selon un plan XZ vers le bas à partir de l'extrémité avant du capotage 33, et se logeant entre les deux têtes d'une chape 74 portée par l'extrémité arrière de l'entrée d'air 32, à forte proximité de son excroissance 31. Un axe de liaison (non représenté) est destiné à traverser les deux têtes de la chape 74 ainsi que la ferrure 72, en s'étendant selon la direction X.

Les deux demi-attaches 62a, 62b sont quant à elles obtenues en prévoyant des butées verticales 76a, 76b orientées vers le bas sur l'extrémité avant du capotage 33, et des butées verticales 78a, 78b orientées vers le haut sur l'extrémité arrière de l'entrée d'air 32, et plus précisément au niveau de la base de son excroissance 31. Bien entendu, ces butées verticales 78a, 78b sont respectivement placées en regard des butées 76a, 76b, et des moyens d'assemblage du type boulon sont prévus pour solidariser ces mêmes butées deux à deux.

Les attaches décrites ci-dessus permettent donc au capotage aérodynamique de jonction 33 de se comporter tel un « wagon » entre l'excroissance aérodynamique 31 de l'entrée d'air 32 et le capotage aérodynamique de berceau 46, et évite donc l'apparition de désaffleurements trop conséquents entre ces éléments. A titre indicatif, ce capotage 33 dispose uniquement d'une fonction aérodynamique, de sorte qu'il peut être réalisé à partir de panneaux ou similaires, connus de l'homme du métier pour ce type d'application. Néanmoins, il peut aussi être équipé d'armatures, dans le simple but d'offrir un support pour les attaches précitées. Dans un tel cas où le capotage 33 intègre des armatures dont le rôle n'est cependant pas d'assurer une fonction structurelle telle que celle remplie par le berceau adjacent 40 portant les capots de soufflante 34, les panneaux et ces armatures peuvent alors éventuellement être fabriqués d'un seul tenant.

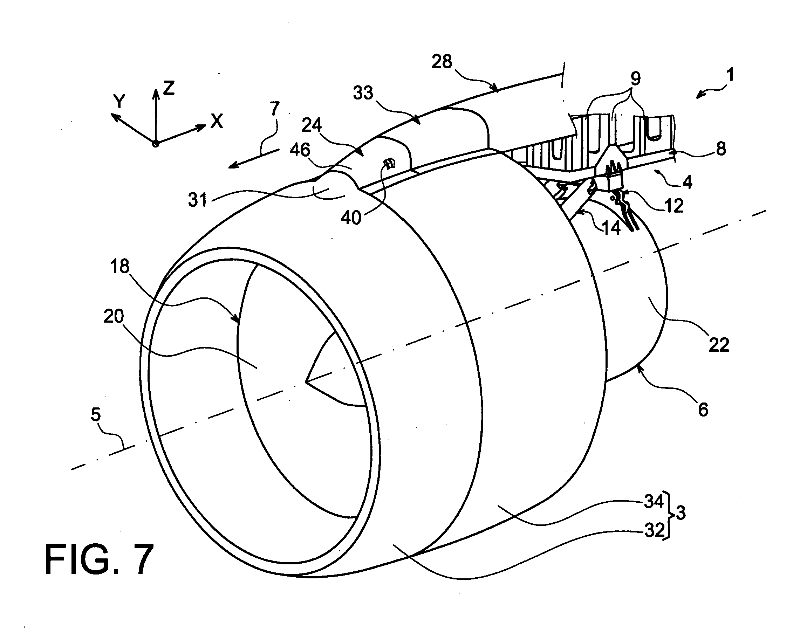

En référence à présent à la figure 7, on voit une partie d'un ensemble moteur selon un second mode de réalisation de la présente invention. Ce mode diffère du premier essentiellement en ce que le berceau de support des capots de soufflante n'est plus monté fixement sur le mât d'accrochage, mais sur ladite entité précitée, et plus particulièrement sur le carter de soufflante.

Ainsi, il n'est de préférence plus prévu de structure aérodynamique avant de mât d'accrochage portant les capots de soufflante, cette structure ou une structure aérodynamique similaire étant alors agencée dans le prolongement arrière de l'excroissance 31 de l'entrée d'air 32, comme cela est visible sur la figure 1 sous la même référence numérique 24.

Globalement, cette structure 24 comporte en effet le berceau 40 rapporté fixement sur le carter de soufflante, ainsi que le capotage aérodynamique de berceau 46 le recouvrant, et se situant dans la continuité aérodynamique arrière de l'excroissance 31.

L'une des particularités de ce second mode de réalisation préféré réside dans la présence d'un carénage aérodynamique de jonction 33 entre la structure aérodynamique 24 et le mât d'accrochage 4, et plus précisément son carénage de raccordement 28. Naturellement, il est recherché à obtenir la meilleure continuité aérodynamique possible entre les éléments jointifs précités 24, 33, 28, qui s'étendent sensiblement selon la direction X au niveau d'une partie supérieure de l'ensemble moteur 1. Comme cela est visible sur la figure 7, les éléments affleurants 24, 33 s'étendent ensemble sur une distance longitudinale correspondant à celle des capots de soufflante 34, au droit desquels ils se situent.

Tout comme la jonction affleurante entre le capotage 46 et le carénage de raccordement 28 rencontrée dans le cadre du premier mode de réalisation, la jonction affleurante de ce second mode entre l'excroissance 31 et la capotage 46 ne présente aucune contrainte, puisque ces deux éléments sont solidaires du carter de soufflante du moteur.

Le carénage aérodynamique de jonction 33 présente de préférence la même conception que celle exposée ci-dessus en référence à la figure 4. De plus, il peut être équipé de moyens d'accrochage similaires, les moyens arrière 52 constituant alors les seconds moyens d'accrochage destinés à être raccordés sur la carénage 28, et les moyens avant 54 constituant les premiers moyens d'accrochage destinés à être raccordés sur le berceau 40.

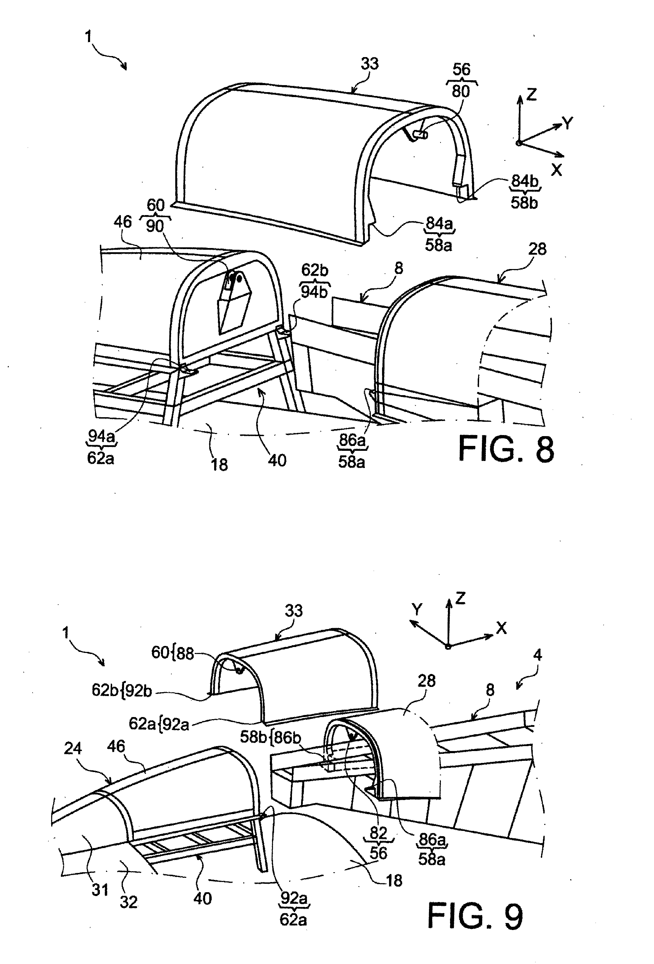

Les figures 8 et 9 montrent un exemple de réalisation pour les différentes attaches constituant les moyens d'accrochage 52, 54. Ainsi, on s'aperçoit que l'attache 56 peut prendre la forme d'un pion 80 s'étendant selon la direction X vers l'arrière à partir de l'extrémité arrière du capotage 33, et traversant une ferrure 82 portée par l'arceau le plus avant du carénage de raccordement 28. Les deux demi-attaches 58a, 58b sont quant à elles obtenues en prévoyant des butées verticales 84a, 84b orientées vers le bas sur l'extrémité arrière du capotage 33, et des butées verticales 86a, 86b orientées vers le haut sur les deux extrémités de l'arceau le plus avant du carénage de raccordement 28, respectivement placées en regard des butées 84a, 84b. Bien entendu, des moyens d'assemblage du type boulon sont prévus pour solidariser les butées deux à deux.

D'autre part, on s'aperçoit que l'attache 60 peut prendre la forme d'une ferrure 88 s'étendant selon un plan XZ vers le bas à partir de l'extrémité avant du capotage 33, et se logeant entre les deux têtes d'une chape 90 portée par l'extrémité arrière de la structure aérodynamique 24 intégrant le berceau 40. Un axe de liaison (non représenté) est destiné à traverser les deux têtes de la chape 90 ainsi que la ferrure 88, en s'étendant selon la direction X.

Les deux demi-attaches 62a, 62b sont quant à elles obtenues en prévoyant des butées verticales 92a, 92b orientées vers le bas sur l'extrémité avant du capotage 33, et des butées verticales 94a, 94b orientées vers le haut sur l'extrémité arrière de la structure aérodynamique 24 intégrant le berceau 40. Bien entendu, ces butées verticales 94a, 94b sont respectivement placées en regard des butées 92a, 92b, et des moyens d'assemblage du type boulon sont prévus pour solidariser ces mêmes butées deux à deux.

Les attaches décrites ci-dessus permettent donc au capotage aérodynamique de jonction 33 de se comporter tel un « wagon » entre le capotage aérodynamique de berceau 46 et la partie avant du carénage de raccordement 28, et évite donc l'apparition de désaffleurements trop conséquents entre ces éléments.

Bien entendu, diverses modifications peuvent être apportées par l'homme du métier à l'invention dont la portée n'est limitée que par le texte des revendications.

A cet égard, on peut notamment indiquer que si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef.

## Revendications

1. Ensemble moteur (1) pour aéronef comprenant un moteur (6) pourvu d'un carter de soufflante (18), un dispositif d'accrochage du moteur (4) ainsi qu'une nacelle (3) entourant le moteur (6) et pourvue d'une entrée d'air (32) et de capots de soufflante (34), ledit ensemble comprenant un berceau (40) sur lequel lesdits capots de soufflante sont articulés, ce berceau (40) étant monté fixement sur ledit dispositif d'accrochage (4),
**caractérisé en ce que** l'ensemble moteur (1) dispose de plus d'un capotage aérodynamique de jonction (33) équipé de premiers moyens d'accrochage (52) montés sur ledit berceau (40) et de seconds moyens d'accrochage (54) montés sur une entité comportant ledit carter de soufflante (18) ainsi que l'entrée d'air (32) fixée sur ledit carter de soufflante (18),
**en ce que** les premiers moyens d'accrochage (52) comprennent une attache (56) conçue de manière à reprendre les efforts s'exerçant selon une direction transversale (Y) du moteur et selon une direction verticale (Z) de ce dernier, mais pas ceux s'exerçant selon une direction longitudinale (X) du moteur (6), ladite attache (56) étant traversée par un plan vertical médian (P) de l'ensemble moteur,
**en ce que** les seconds moyens d'accrochage (54) comprennent une attache (60) conçue de manière à reprendre les efforts s'exerçant selon la direction longitudinale (X), la direction transversale (Y) et la direction verticale (Z), ladite attache (60) étant traversée par ledit plan vertical médian (P),
et **en ce que** les moyens d'accrochage du capotage aérodynamique de jonction (33) permettent à celui-ci de se comporter tel un wagon entre l'entrée d'air (32) et un capotage aérodynamique du berceau (24).

2. Ensemble moteur (1) selon la revendication 1, **caractérisé en ce que** lesdits premiers et seconds moyens d'accrochage (52, 54) équipant le capotage aérodynamique de jonction (33) sont respectivement agencés à proximité d'une extrémité arrière et d'une extrémité avant de ce même capotage aérodynamique de jonction.

3. Ensemble moteur (1) selon la revendication 1 ou la revendication 2, **caractérisé en ce que** ledit berceau (40) est monté fixement sur une structure rigide (8) dudit dispositif d'accrochage (4), ce berceau faisant partie intégrante d'une structure aérodynamique avant (24) du dispositif d'accrochage (4), et **en ce que** lesdits seconds moyens d'accrochage (54) équipant le capotage aérodynamique de jonction sont montés sur l'entrée d'air (32).

4. Ensemble moteur (1) pour aéronef comprenant un moteur (6) pourvu d'un carter de soufflante (18), un dispositif d'accrochage du moteur (4) ainsi qu'une nacelle (3) entourant le moteur (6) et pourvue d'une entrée d'air (32) et de capots de soufflante (34), ledit ensemble comprenant un berceau (40) sur lequel lesdits capots de soufflante sont articulés, ce berceau (40) étant monté fixement sur une entité comportant ledit carter de soufflante (18) ainsi que l'entrée d'air (32) fixée sur ledit carter de soufflante (18),
**caractérisé en ce que** l'ensemble moteur (1) dispose de plus d'un capotage aérodynamique de jonction (33) équipé de premiers moyens d'accrochage (54) montés sur ledit berceau (40) et de seconds moyens d'accrochage (52) montés sur ledit dispositif d'accrochage (4),
**en ce que** les seconds moyens d'accrochage (52) comprennent une attache (56) conçue de manière à reprendre les efforts s'exerçant selon une direction transversale (Y) du moteur et selon une direction verticale (Z) de ce dernier, mais pas ceux s'exerçant selon une direction longitudinale (X) du moteur (6), ladite attache (56) étant traversée par un plan vertical médian (P) de l'ensemble moteur,
**en ce que** les premiers moyens d'accrochage (54) comprennent une attache (60) conçue de manière à reprendre les efforts s'exerçant selon la direction longitudinale (X), la direction transversale (Y) et la direction verticale (Z), ladite attache (60) étant traversée par ledit plan vertical médian (P),
et **en ce que** les moyens d'accrochage du capotage aérodynamique de jonction (33) permettent à celui-ci de se comporter tel un wagon entre un capotage aérodynamique du berceau (24) et un carénage de raccordement (28) du dispositif d'accrochage (4).

5. Ensemble moteur (1) selon la revendication 4, **caractérisé en ce que** ledit berceau (40) est monté fixement sur ledit carter de soufflante (18), et **en ce que** lesdits seconds moyens d'accrochage (52) équipant le capotage aérodynamique de jonction (33) sont montés sur ledit carénage (28).

6. Aéronef comprenant au moins un ensemble moteur (1) selon l'une quelconque des revendications précédentes, assemblé sur une aile ou sur une partie arrière de fuselage de cet aéronef.

## Claims

1. An engine assembly (1) for aircraft comprising an engine (6) provided with a fan casing (18), a device for mounting the engine (4) as well as a nacelle (3) surrounding the engine (6) provided with an air intake (32) and fan cowls (34), said assembly comprising a cradle (40) on which said fan cowls are jointed, this cradle (40) being fixedly mounted on said mounting device (4),
**characterized in that** the engine assembly (1) further has an aerodynamic junction cowling (33) equipped with first attachment means (52) mounted on said cradle (40) and with second mounting means (54) mounted on an entity including said fan casing (18) as well as the air intake (32) fixed on said fan casing (18),
**in that** the first attachment means (52) comprise an attachment (56) designed so as to spread the loads exerted along a transverse direction (Y) of the engine and along a vertical direction (Z) of the latter, but not those exerted along a longitudinal direction (X) of the engine (6), said attachment (56) being crossed by a middle vertical plane (P) of the engine assembly,
**in that** the second attachment means (54) comprise an attachment (60) designed so as to spread the loads exerted along the longitudinal direction (X), the transverse direction (Y) and the vertical direction (Z), said attachment (60) being crossed by said middle vertical plane (P),
and **in that** the means for attaching the aerodynamic junction cowling (33) allow the latter to behave such as a wagon between the air intake (32) and aerodynamic cowling of the cradle (24).

2. The engine assembly (1) according to claim 1, **characterized in that** said first and second attachment means (52, 54) with which the aerodynamic junction cowling (33) is equipped, are respectively laid out in proximity to a rear end and to a front end of this same aerodynamic junction cowling.

3. The engine assembly (1) according to claim 1 or claim 2, **characterized in that** said cradle (40) is fixedly mounted on a rigid structure (8) of said mounting device (4), this cradle being an integral part of a front aerodynamic structure (24) of the attachment device (4), and **in that** said second attachment means (54) with which the aerodynamic junction cowling is equipped, are mounted on the air intake (32).

4. The engine assembly (1) for aircraft comprising an engine (6) provided with a fan casing (18), a device for mounting the engine (4) as well as a nacelle (3) surrounding the engine (6) and provided with an air intake (32) and fan cowls (34), said assembly comprising a cradle (40) on which said fan cowls are jointed, this cradle (40) being fixedly mounted on an entity including said fan casing (18) as well as the air intake (32) fixed on said fan casing (18),
**characterized in that** the engine assembly (1) further has an aerodynamic junction cowling (33) equipped with first attachment means (54) mounted on said cradle (40) and with second attachment means (52) mounted on said attachment device (4),
**in that** said attachment means (52) comprise an attachment (56) designed so as to spread the loads exerted along a transverse direction (Y) of the engine and along a vertical direction (Z) of the latter, but not those exerted along a longitudinal direction (X) of the engine (6), said attachment (56) being crossed by a middle vertical plane (P) of the engine assembly,
**in that** the first attachment means (54) comprise an attachment (60) designed so as to spread the loads exerted along the longitudinal direction (X), the transverse direction (Y) and vertical direction (Z), said attachment (60) being crossed by said middle vertical plane (P),
and **in that** the means for attaching the aerodynamic junction cowling (33) allow the latter to behave as a wagon between an aerodynamic cowling of the cradle (24) and a fairing (28) for connection of the attachment device (4).

5. The engine assembly (1) according to claim 4, **characterized in that** said cradle (40) is fixedly mounted on said fan casing (18), and **in that** said second attachment means (52) with which the aerodynamic junction cowling (33) is equipped, are mounted on said fairing (28).

6. An aircraft comprising at least an engine assembly (1) according to any of the preceding claims, assembled on a wing or on a rear fuselage portion of this aircraft.

## Patentansprüche

1. Triebwerkanordnung (1) für ein Luftfahrzeug, umfassend ein Triebwerk (6), das ein Fangehäuse (18) aufweist, eine Aufhängevorrichtung des Triebwerks (4) sowie eine Gondel (3), die das Triebwerk (6) umgibt und einen Lufteinlass (32) und Fanverkleidungen (34) aufweist, wobei die Anordnung ein Traggestell (40) aufweist, mit dem die Fanverkleidungen beweglich verbunden sind, wobei dieses Traggestell (40) fest an der Aufhängevorrichtung (4) angebracht ist,
**dadurch gekennzeichnet, dass** die Triebwerkanordnung (1) ferner ein Verbindungsteil einer aerodynamischen Verkleidung (33) aufweist, das mit ersten Aufhängemitteln (52), die an dem Traggestell (40) angebracht sind, und mit zweiten Aufhängemitteln (54), die an einem Gebilde angebracht sind, das das Fangehäuse (18) sowie den an dem Fangehäuse (18) befestigten Lufteinlass (32) umfasst, ausgestattet ist,
dass die ersten Aufhängemittel (52) eine Befestigung (56) umfassen, die zur Aufnahme von Kräften, die in einer Querrichtung (Y) des Triebwerks und in einer Vertikalrichtung (Z) dieses Letzteren auftreten, jedoch nicht von Kräften, die in einer Längsrichtung (X) des Triebwerks (6) auftreten, gestaltet ist, wobei eine vertikale Mittelebene (P) der Triebwerkanordnung durch die Befestigung (56) geht,
dass die zweiten Aufhängemittel (54) eine Befestigung (60) umfassen, die zur Aufnahme von Kräften, die in der Längsrichtung (X), der Querrichtung (Y) und der Vertikalrichtung (Z) auftreten, gestaltet ist, wobei die vertikale Mittelebene (P) durch die Befestigung (60) geht,
und dass die Aufhängemittel des Verbindungsteils einer aerodynamischen Verkleidung (33) zulassen, dass sich dieses wie ein Wagen zwischen dem Lufteinlass (32) und einer aerodynamischen Verkleidung des Traggestells (24) verhält.

2. Triebwerkanordnung (1) nach Anspruch 1, **dadurch gekennzeichnet, dass** die ersten und zweiten Aufhängemittel (52, 54), mit denen das Verbindungsteil der aerodynamischen Verkleidung (33) ausgestattet ist, jeweils nahe einem hinteren Ende und einem vorderen Ende von eben diesem Verbindungsteil der aerodynamischen Verkleidung angebracht sind.

3. Triebwerkanordnung (1) nach Anspruch 1 oder Anspruch 2, **dadurch gekennzeichnet, dass** das Traggestell (40) fest an einer starren Struktur (8) der Aufhängevorrichtung (4) angebracht ist, wobei dieses Traggestell ein integrierender Bestandteil einer vorderen aerodynamischen Struktur (24) der Aufhängevorrichtung (4) ist, und dass die zweiten Aufhängemittel (54), mit denen das Verbindungsteil der aerodynamischen Verkleidung ausgestattet ist, an dem Lufteinlass (32) angebracht sind.

4. Triebwerkanordnung (1) für ein Luftfahrzeug, umfassend ein Triebwerk (6), das ein Fangehäuse (18) aufweist, eine Aufhängevorrichtung des Triebwerks (4) sowie eine Gondel (3), die das Triebwerk (6) umgibt und einen Lufteinlass (32) und Fanverkleidungen (34) aufweist, wobei die Anordnung ein Traggestell (40) aufweist, mit dem die Fanverkleidungen beweglich verbunden sind, wobei dieses Traggestell (40) fest an einem Gebilde befestigt ist, das das Fangehäuse (18) sowie den an dem Fangehäuse (18) befestigten Lufteinlass (32) umfasst,
**dadurch gekennzeichnet, dass** die Triebwerkanordnung (1) ferner ein Verbindungsteil einer aerodynamischen Verkleidung (33) aufweist, das mit ersten Aufhängemitteln (54), die an dem Traggestell (40) angebracht sind, und mit zweiten Aufhängemitteln (52), die an der Aufhängevorrichtung (4) angebracht sind, ausgestattet ist,
dass die zweiten Aufhängemittel (52) eine Befestigung (56) umfassen, die zur Aufnahme von Kräften, die in einer Querrichtung (Y) des Triebwerks und in einer Vertikalrichtung (Z) dieses Letzteren auftreten, jedoch nicht von Kräften, die in einer Längsrichtung (X) des Triebwerks (6) auftreten, gestaltet ist, wobei eine vertikale Mittelebene (P) der Triebwerkanordnung durch die Befestigung (56) geht,
dass die ersten Aufhängemittel (54) eine Befestigung (60) umfassen, die zur Aufnahme von Kräften, die in der Längsrichtung (X) der Querrichtung (Y) und der Vertikalrichtung (Z) auftreten, gestaltet ist, wobei die vertikale Mittelebene (P) durch die Befestigung (60) geht,
und dass die Aufhängemittel des Verbindungsteils einer aerodynamischen Verkleidung (33) zulassen, dass sich dieses wie ein Wagen zwischen einer aerodynamischen Verkleidung des Traggestells (24) und einem stromlinienförmigen Verbindungsteil (28) der Aufhängevorrichtung (4) verhält.

5. Triebwerkanordnung (1) nach Anspruch 4, **dadurch gekennzeichnet, dass** das Traggestell (40) fest an dem Fangehäuse (18) angebracht ist und dass die zweiten Aufhängemittel (52), mit denen das Verbindungsteil der aerodynamischen Verkleidung (33) ausgestattet ist, an dem stromlinienförmigen Teil (28) angebracht sind.

6. Luftfahrzeug, umfassend mindestens eine Triebwerkanordnung (1) nach einem der vorhergehenden Ansprüche, die an einem Tragflügel oder einer hinteren Partie des Rumpfes dieses Luftfahrzeugs angebracht ist.
